# EUROPEAN PATENT APPLICATION

(11) **EP 1 433 556 A1**
(43) Date of publication of application: **30.06.2004**
(21) Application number: 03029261.9
(22) Date of filing: 19.12.2003
(51) Int. Cl.: B23B 13/02

(54) **Bar feeder for single-spindle and multispindle lathes**

(30) Priority: 23.12.2002 IT BO20020812
(71) Applicant: IEMCA Giuliani Macchine Italia S.p.A., 48018 Faenza (Ravenna) (IT)
(72) Inventor: Morgantini, Luca, 47 100 Forli (IT)
(74) Representative: Modiano, Guido, Dr.-Ing.

(57) **Abstract**

A feeder (1,21) for single-spindle and multispindle lathes, comprising a portion that is arranged inside the casing (3,23) of the lathe and reaches the inlet of at least one spindle (15,25); the portion is provided with guiding elements (16a,24) that are adapted to guide the bar and are provided with devices (16b) for adjusting the diameter of the guiding units and with elements (16) for guiding and moving at least one carriage for the advancement of at least one bar pusher rod (17).

## Description

The present invention relates to a feeder for single-spindle and multispindle lathes.

In bar feeders for lathes, guiding of the bars is ensured by devices that compose the channel or channels provided on the feeder.

Such devices are the ones deemed most appropriate by the bar feeder manufacturer for damping vibration and noise induced by the rotation of the bar.

However, these devices are not applied from the front limit of the feeder onward toward the spindle or the lathe spindle drum, since the lathe manufacturer is in charge of that region.

Therefore, it is standard practice to merely provide extensions to ensure continuity of the channel (or channels) between the feeder and the lathe and reduction units that are merely tubes, whose diameter is proximate to the diameter of the bars to be guided, arranged inside the extensions and/or spindles; the reduction units therefore must be replaced according to the diameter of the bar to be machined.

The play between the reduction tube and the bar is often a few millimeters, both because of the need to limit the number of diameters of the reduction units to a number that is convenient in terms of production and because the reduction unit must also ensure the passage of the bar pusher, which in order to guide the rear part of the bar retains the part with an elastic clamp whose outside diameter is a few millimeters larger than the diameter of the bar.

The reduction units start approximately from the rear shoulder of the lathe and reach the front clamps of the spindle or spindles of the lathe, and can be formed monolithically but also in two parts, particularly for multispindle lathes, where one reduction unit remains inside the tube/spindle of the lathe and one lies between the rear disk of the lathe and the spindle drum.

The longer the reduction tubes, the more precarious the guiding of the bars inside them, where bar vibration modes occur without any possibility of damping (except for limiting the maximum amplitude of the vibrations).

It should be noted that the bar is retained at one end by the clamp of the lathe and is retained at the other end by the guiding units of the feeder or by the clamp of the bar pusher (or also by devices inserted between the feeder and the rear shoulder of the lathe); the part of the bar that is contained in the reduction unit is instead not retained in any way.

Guiding bushes inside the reduction units have also been used which allow to keep the end part of the bar guided with good precision when the bar pusher passes, but a portion of the bar that can be as long as the reduction tubes themselves still remains free.

When using a guiding system with sprockets, of the type disclosed in EP-574882, it is not necessary to replace the guiding units, at least the guiding units located in the feeder, owing to the fact that the sprockets are conveniently shaped, constituting guiding channels for all practical purposes.

The problem is felt more strongly in the application of a bar feeder to lathes that machine bars that have a large diameter, owing to the larger dimensions of the machine tool, which leads to a greater length of the part of the bar that is not guided, and owing to the large mass of the parts that vibrate.

The aim of the present invention is to obviate the above-cited drawbacks and meet the cited requirements, by providing a feeder for single-spindle and multispindle lathes that guides and retains the bars being machined up to the inlet of the spindles of the lathe, reducing the free length of the bar and forcing a considerable reduction of vibrations.

Within this aim, an object of the present invention is to provide a feeder that is simple, relatively easy to provide in practice, safe in use, effective in operation, and has a relatively low cost.

This aim and this and other objects that will become better apparent hereinafter are achieved by the present feeder for single-spindle and multispindle lathes, characterized in that said feeder comprises a portion that is arranged inside the casing of said lathe and reaches the inlet of at least one spindle, said portion being provided with guiding elements that are adapted to guide the bar, said guiding elements being provided with devices for adjusting the diameter of said guiding units and with elements for guiding and moving at least one carriage for the advancement of at least one bar pusher rod.

Further characteristics and advantages of the feeder according to the invention will become better apparent from the following detailed description of a preferred but not exclusive embodiment of a feeder for single-spindle and multispindle lathes according to the invention, illustrated by way of non-limiting example in the accompanying drawings, wherein:

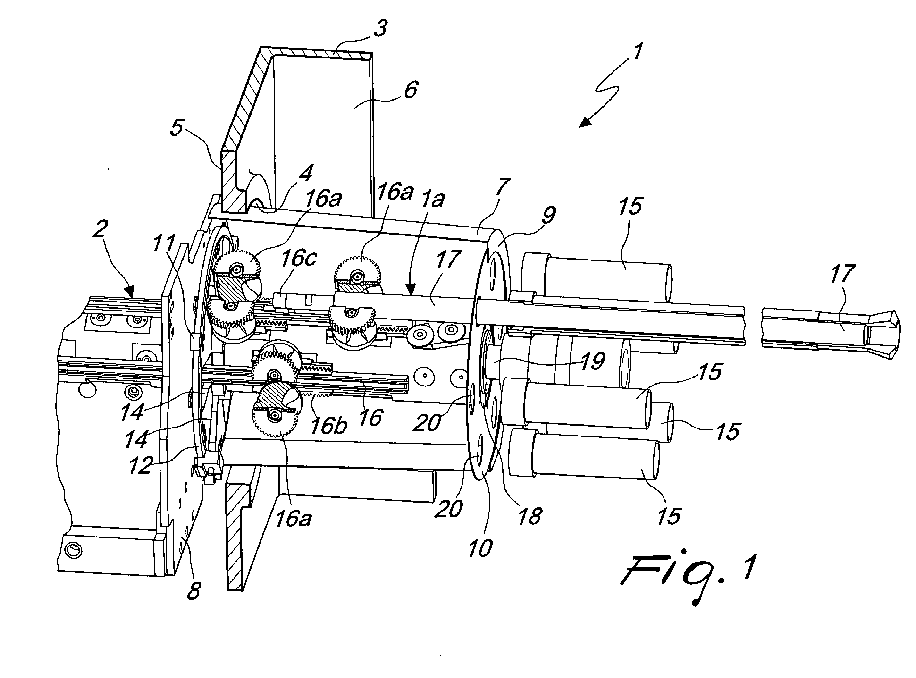

Figure 1 is a partially sectional perspective view of a multispindle feeder according to the invention;

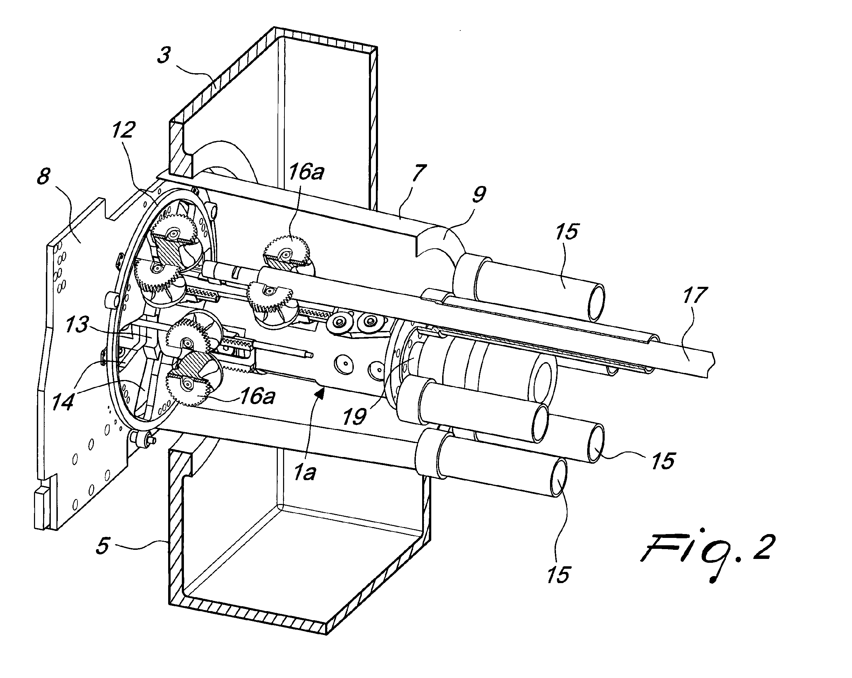

Figure 2 is a partially sectional perspective view, taken from a different viewpoint with respect to Figure 1, of a multispindle feeder according to the invention;
Figure 3 is a partially sectional perspective view of a single-spindle feeder according to the invention.

With reference to the figures, the reference numeral 1 generally designates a drum feeder for multispindle lathes according to the invention.

The feeder 1 has a part that is external to the casing 3 of the lathe, the shaft portion 2 of which is shown in the figure, and a portion that is arranged inside the casing.

The type of feeder 1 shown in the figures is for example of the type disclosed in EP-574882 in the name of this same Applicant.

However, the invention can also be applied to conventional drum feeders with continuous and discontinuous guiding units and also to feeders for single-spindle lathes.

Through the opening 4 provided in the rear shoulder 5 of the casing 3, the feeder 1 accesses the compartment 6 with a portion that is distinguished from the remaining part by the reference numeral 1a.

All the elements of the feeder 1 are contained within a bell 7. The bell is also designed to shield and convey any oil required for lubrication of the feeder 1 toward a discharge outlet; at the rear, the bell 7 rests against a closure plate 8, which is rigidly fixed, by way of adapted anchoring means, to the rear shoulder 5 of the casing 3, and at the front the bell is provided with a lip 9 that is folded inward so as to constitute a ring that is peripherally contiguous to a first disk 10. Ball bearings 11 are fixed to the closure plate 8 and cantilever out toward the lathe parallel to the rotation axis of the feeder. The bearings 11 support a second disk 12 that is fixed to the shaft portion 2.

The rotating disk 12 has a central hole 13 for the passage of the shaft portion 2 of the feeder 1 and a plurality of radial slots 14 whose number is equal to the number of spindles 15 of the lathe, i.e., equal to the maximum number of bars that can be accommodated in the feeder 1.

The elements for handling the bars are rigidly coupled to the shaft 2 of the feeder 1, as described extensively in the above cited EP-574882; the elements are constituted by guiding sprockets 16a, which are actuated by means of racks 16b and are appropriately shaped in order to adapt to bars of different diameters. By way of the sprockets 16a, the bar is guided toward the lathe and is supported during rotation. A bar pusher 17 pushes the bar being machined toward the spindles 15 of the lathe; in turn, the bar pusher 17 is pushed and guided in its rear part by a carriage 16c that slides along the guiding unit 16.

The disk 10 separates the portion 1a of the feeder 1 that lies inside the lathe casing 3 from the spindles 15; the disk 10 has a central hole 18 for the passage of a coupling 19 for the shaft for rotationally driving the feeder 1 and a plurality of perimetric holes 20 for the passage of the bars. Such holes 20 are equal in number to the spindles 15 and are aligned with them.

The operation of the feeder is as follows. Once the bars to be machined have been placed in the feeder 1, the bars access, by way of the bar pusher 17, through the slots 14, the inside of the casing 3 of the lathe and are retained by the sprockets 16a up to the second disk 10. Through the holes 20, the bars exit from the feeder 1 in order to enter the respective spindles 15. The bars being machined, being guided by the sprockets 16a to the vicinity of the spindles 15, are therefore subjected to a lesser extent to vibrations, allowing better machinability and reduced noise.

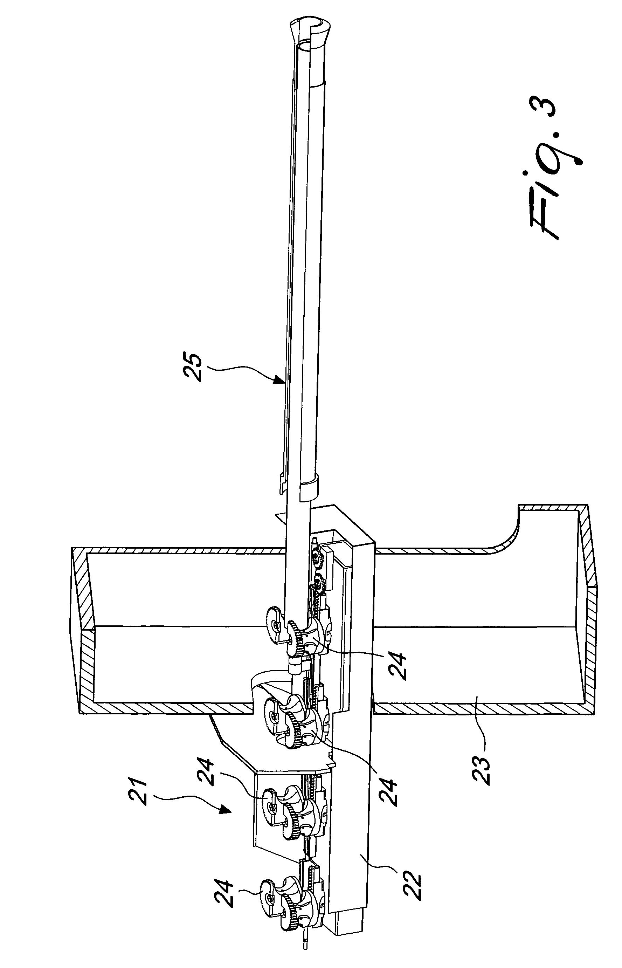

With reference to Figure 3, for single-spindle lathes, a portion 22 of the single-spindle feeder 21 reaches inside a casing 23 of the lathe. Guiding sprockets 24 are mutually arranged so that a guiding channel is formed between them, the bar passing within said channel in order to access the lathe, said channel being coaxial to the spindle of the lathe 25.

It has thus been shown that the invention achieves the intended aim and object.

The invention thus conceived is susceptible of numerous modifications and variations imposed by the structure of the feeder, all of which are within the scope of the appended claims.

All the details may further be replaced with other technically equivalent ones.

In the embodiments cited above, individual characteristics, given in relation to specific examples, may actually be interchanged with other different characteristics that exist in other embodiments.

In practice, the materials used, as well as the shapes and the dimensions, may be any according to requirements without thereby abandoning the scope of the protection of the appended claims.

The disclosures in Italian Patent Application No. BO2002A000812, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A feeder for single-spindle and multispindle lathes, **characterized in that** said feeder comprises a portion that is arranged inside the casing of said lathe and reaches the inlet of at least one spindle, said portion being provided with guiding elements that are adapted to guide the bar, said guiding elements being provided with devices for adjusting the diameter of said guiding units and with elements for guiding and moving at least one carriage for the advancement of at least one bar pusher rod.

2. The feeder according to claim 1, **characterized in that** the element designed to actuate the device for adjusting the diameter of the guides arranged in the portion contained within the casing of the lathe and the apparatus designed to adjust the guiding elements arranged along the at least one channel of the feeder are mutually independent.

3. The feeder for multispindle lathes according to claim 1, **characterized in that** a rotating drum of the lathe that supports the spindles is functionally connected to the drum feeder.

4. The feeder according to claim 1, **characterized in that** said lathe has a compartment in its rear part, which is accessed by means of an opening provided in the rear shoulder of said lathe, and **in that** said opening accommodates a bell for containing the elements of said feeder that reaches said spindles.

5. The feeder according to claim 4, **characterized in that** said bell is rigidly coupled at the rear to a closure plate, on which a first disk is rotatably coupled, said first disk being provided with a central hole for the passage of the shaft that supports the devices for containing and guiding the bars and for the rotational actuation of the feeder on the part of the lathe drum.

6. The feeder according to claim 5, **characterized in that** said first disk is supported rotatably by way of bearings that are pivoted to the end plate of the feeder and are arranged along the circumference of said first disk.

7. The feeder according to claim 4, **characterized in that** said bell is delimited at the front by a second disk, which also can rotate and is provided with a central hole for the passage of the shaft of the feeder for driving the drum and with a plurality of holes arranged along a circumference, each hole facing a respective spindle of said lathe.

8. The feeder according to claim 4, **characterized in that** said bell and said first and second disks constitute a protective shield for the oil for lubricating the elements of said feeder.

9. The feeder according to claim 1, **characterized in that** it comprises a plurality of elements for moving the bar pusher that reach the vicinity of the spindles of the lathe and are adapted to reduce the length of the bar pusher in order to reduce vibrations.

10. The feeder for single-spindle lathes according to claim 1, **characterized in that** said bar reaches the spindle of the lathe by sliding longitudinally within a guiding unit that is coaxial to the axis of said spindle.

11. The feeder according to claim 1, **characterized in that** the elements adapted to guide the bars and the elements for adjusting said elements that are part of the portion of the feeder that lies within the lathe are supported by supporting elements that are part of said lathe.

12. The feeder according to claim 1, **characterized in that** the elements adapted to move and guide the at least one carriage for the advancement of the at least one bar pusher rod that are arranged inside said lathe up to the vicinity of at least one spindle are supported by supporting elements that are part of said lathe.
